Europäisches Patentamt

European Patent Office

Office européen des brevets

(11) Numéro de publication: **0 153 544**

**A1**

# DEMANDE DE BREVET EUROPEEN

(21) Numéro de dépôt: 84810074.9

(22) Date de dépôt: 07.02.84

(51) Int. Cl.⁴: **F 16 L 11/08**
**B 29 C 47/02**

(43) Date de publication de la demande:
04.09.85 Bulletin 85/36

(84) Etats contractants désignés:
BE DE FR GB IT SE

(71) Demandeur: EXIT S.A.
Route de Trélex
CH-1266 Duillier(CH)

(72) Inventeur: Leisi, Marcel
26B, Avenue de Tronchet
CH-1226 Thonex(CH)

(74) Mandataire: Dietlin, Henri et al,
DIETLIN, MOHNHAUPT & Cie 16, rue du Mont-Blanc
CH-1201 Genève(CH)

(54) **Tuyau flexible.**

(57) Le tuyau comprend une âme (1) en une matière élastique renforcée par un tressage de brins d'acier (2), lui-même recouvert d'un revêtement anti-abrasif ou résistant aux produits chimiques (3). Le tressage est réalisé à partir de cordes (4, 5, 6 et 7) comprenant chacune de trois à sept brins d'acier. L'angle de tressage (α) est situé entre 25 et 55°.

0153544

## Tuyau flexible.

L'invention a pour objet un tuyau flexible comprenant une âme et une matière élastique renforcée par un tressage de brins d'acier, lui-même recouvert d'un revêtement anti-abrasion ou résistant aux produits chimiques et/ou aux dérivés du pétrole, notamment mazout, essence, huile, etc.

Les tuyaux flexibles constitués d'une âme élastique et d'un tressage de brins d'acier sont utilisés dans la technique depuis de nombreuses années. Ils servent à véhiculer des liquides à des pressions allant jusqu'à 400 bars et leur pression d'éclatement peut aller jusqu'à 1200 bars. Ils sont en général utilisés à des pressions allant de 0 à 250 bars avec des variations de pressions dans les deux sens pouvant aller jusqu'à 200 bars. Les liquides qu'ils véhiculent sont en général des produits chimiques, des peintures, des huiles, etc.

Vu les hautes pressions auxquelles ils sont soumis, ils sont de préférence réalisés de manière à pouvoir supporter ces hautes pressions et présentent une rigidité extrême. Ils peuvent difficilement être courbés et dans le cas où l'on essaye de les soumettre à un rayon de courbure relativement faible, ils cassent et sont définitivement âbimés. Tous les tuyaux actuellement sur le marché présentent un tressage à partir de brins d'acier et présentent l'inconvénient d'être particulièrement rigides.

Le but de l'invention est de proposer un tuyau qui soit plus souple et qui présente les propriétés d'un tuyau flexible tout en supportant les hautes pressions mentionnées ci-dessus.

Un autre but de l'invention est de proposer un tuyau flexible qui puisse travailler en diamètre, c'est-à-dire qui présente une certaine élasticité et de par ce fait absorber les variations de pression. Un tel tuyau est en somme un accumulateur de liquides et fonctionne comme anti-bellier.

Le tuyau flexible selon l'invention est caractérisé en ce que le tressage est réalisé à partir de cordes comprenant chacune de trois à sept brins.

Les cordes peuvent être constituées à partir de brins tressés, guipés ou toronnés.

Selon un mode d'exécution préféré, les cordes forment un angle de tressage par rapport à l'axe du tuyau situé entre 25 et 55°. De préférence, cet angle de tressage sera situé entre 30 et 45°, Dans le

mode d'exécution préféré, l'angle de tressage à la grimace des cordes par rapport à l'axe du tuyau est situé entre 40 et 55°. Le coefficient de revêtement de l'âme à l'aide des cordes d'acier peut varier entre 60 et 92%, de préférence entre 70 et 85%.

L'invention a également pour objet un procédé de fabrication d'un tuyau flexible, caractérisé en ce qu'on tresse sur une âme élastique des cordes préalablement constituées à l'aide de trois à sept brins d'acier, le tressage étant réalisé à l'aide de douze, seize, vingt-quatre, trente deux ou trente six fuseaux contenant chacun de deux à six cordes. Dans le procédé de fabrication du tuyau flexible, les cordes sont préalablement constituées à l'aide de brins tressés, guipés, ou toronnés.

Le fait que le tressage soit réalisé à partir de cordes constituées chacune de trois à sept brins assemblés et que l'angle de tressage de ces cordes soit relativement fermé, c'est-à-dire situé entre 25 et 55°, permet d'obtenir un tuyau souple présentant les caractéristiques anti-bellier mentionnées ci-dessus.

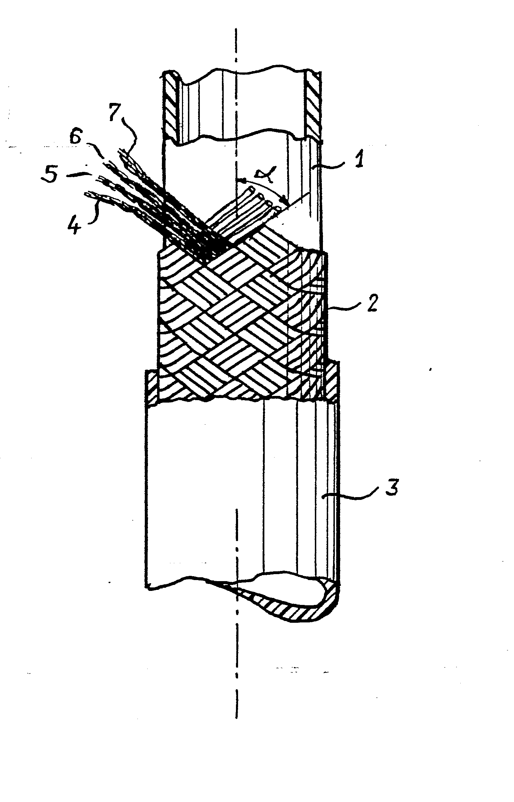

La figure unique du dessin représente une vue d'un mode d'exécution d'un tuyau flexible selon l'invention, le revêtement anti-abrasion ainsi que le tressage ayant été partiellement arrachés, de manière à dénuder l'âme du tuyau.

Le tuyau flexible représenté dans la figure unique du dessin comprend une âme en matière élastique 1 renforcée par un tressage 2, le tressage étant recouvert au moyen d'un revêtement anti-abrasif ou résistant aux produits chimiques 3. L'âme 1 se présente sous la
forme d'un tuyau en polyester ou en un élastomère plastifié ou non plastifié. L'âme peut également être réalisée
en un autre polymère du type nylon ou polyuréthane. En
variante, l'âme 1 peut également être réalisée à partir
de caoutchouc. De même, le revêtement anti-abrasif 3
appliqué sur le tressage 2 est un élastomère thermoplastique ou non ou un autre polymère, par exemple du
nylon. Ce revêtement peut également suivant l'utilisation que l'on veut en faire être réalisé en caoutchouc.

Le tressage 2 est obtenu à partir de deux
fois huit fuseaux à quatre cordes, ce qui permet d'obtenir le tressage croisé représenté dans le dessin. On
remarque que chaque fuseau tresse quatre cordes 4, 5,
6 et 7, chacune de ces cordes comprenant sept brins
d'acier. Les brins d'acier sont soit tressés, soit guipés, soit toronnés. Le diamètre intérieur de l'âme 1
est de 1/4 de pouce, c'est-à-dire 6,35 mm et la paroi
de l'âme a une épaisseur de 1/16 de pouce, c'est-à-dire
une épaisseur de 1,4 mm. Comme mentinné plus haut, le
tressage est réalisé à partir de deux fois huit fuseaux,
c'est-à-dire seize fuseaux à quatre cordes, c'est-à-dire
soixante quatre cordes. Chaque corde étant constituée
de sept brins, on a donc un tressage de quatre cent
quarante huit brins d'acier, ce qui correspond à un
coefficient de recouvrement de 69%. L'angle de tressage $\measuredangle$ des cordes 4, 5, 6 et 7 relativement à l'axe du
tuyau est de 36$^{\circ}$. L'angle de tressage des cordes 4, 5,
6 et 7 à la grimace est de 44$^{\circ}$. Cet angle de tressage
à la grimace n'est pas représenté dans le dessin, mais
l'homme du métier sait exactement à quoi il correspond.

Avec le tuyau flexible qui vient d'être décrit,
qui présente un coefficient de recouvrement de 69%, le
tuyau présente une pression d'éclatement de 1200 bars
environ. Il est clair pour l'homme du métier que si
l'on veut augmenter la pression d'éclatement, il est
nécessaire d'augmenter le coefficient de recouvrement
de l'âme. Ce coefficient de recouvrement peut aller
jusqu'à un maximum de 92%.

Selon une variante du tuyau flexible qui vient
d'être décrit, on peut prévoir un tressage à partir
de huit fuseaux à quatre cordes et huit fuseaux à
trois cordes, ce qui correspond à un tressage de
vingt quatre plus trente deux égal cinquante six cordes
de sept brins chacune. Le tressage de cette variante
aura donc cinquante six fois sept égal trois cent nonante deux brins, ce qui correspond à un coefficient
de recouvrement de 60%. Cette variante de tuyau sera
plus souple que le tuyau décrit en regard de la figure
unique du dessin et permettra une plus grande variation
de volume, de sorte qu'il sera un anti-bellier parfait.
L'angle de tressage du tuyau de la variante qui vient
d'être décrite est égal à l'angle de tressage du tuyau
décrit en regard de la figure unique du dessin, c'est-
à-dire qu'il sera de 36$^O$ et que l'angle à la grimace
sera de 44$^O$.

Les deux tuyaux qui viennent d'être décrits
seront avantageusement utilisés pour amener vers un
pistolet de la peinture sous pression, de manière
à pouvoir effectuer une pulvérisation sans brouillard
et sans air. De tels pistolets (airless) sont reliés
à une pompe haute pression par l'intermédiaire du
tuyau qui vient d'être décrit et fonctionnent comme anti-belliers, c'est-à-dire qu'ils éliminent les variations de pression se produisant lors des changements de cycle de la pompe.

Les cordes 4, 5, 6 et 7 du mode d'exécution décrit en regard de la figure unique du dessin ainsi que de la variante sont comme déjà mentionné soit tressées, soit guipées, soit toronnées. On pourra réaliser des tuyaux présentant un diamètre intérieur allant de 2 mm à 3 pouces et plus sans problème particulier. Les cordes d'acier 4 à 7 seront préalablement réalisées à partir des brins qui les composent, avant d'être bobinées sur des fuseaux pour le tressage du tuyau. On pourra bobiner sur les fuseaux de deux à six cordes, chacune contenant de trois à sept brins d'acier. Les machines à tresser auront douze, seize, vingt-quatre, trente deux, trente six ou quarante huit fuxeaux, selon les techniques de tressage actuelles. Des machines de tressage conventionnelles peuvent être utilisées pour réaliser les tuyaux flexibles qui viennent d'être décrits. On prendra simplement la précaution d'effectuer un réglage de manière à obtenir les angles de tressage $\measuredangle$ allant entre des limites de 25 à 55$^O$, ce qui n'est pas usuel. En effet, lors de la réalisation des tuyaux flexibles à partir de brins directement tressés selon l'état de la technique, on règle les machines de manière à obtenir des angles de tressage de 100$^O$ environ, c'est-dire des angles de tressage beaucoup plus ouverts que les angles de tressage selon l'invention.

Le tuyau flexible qui vient d'être décrit peut évidemment subir de nombreuses variations dans ces paramètres. Comme mentionné plus haut, les tressages peuvent être réalisés à partir de cordes comprenant non

0153544

plus sept brins, mais deux, trois, quatre, cinq ou six brins. Le tressage peut être réalisé non plus à partir de seize fuseaux, mais à partir de douze ou vingt-quatre ou d'un plus grand nombre de fuseaux selon la machine à tresser utilisée. L'idée maîtresse de l'invention réside cependant dans le fait que l'on tresse non plus des brins comme cela a été le cas jusqu'à aujourd'hui, mais des cordes préalablement réalisées à partir de brins tressés, guipés ou toronnés. D'autre part, les angles de tressage ont été fortement diminués et ces angles varient entre 25 et 55$^{\circ}$, de préférence entre 30 et 45$^{\circ}$, de manière à réaliser un tuyau beaucoup plus élastique et beaucoup plus apte à compenser des variations de pression.

<u>REVENDICATIONS</u>

1. Tuyau flexible comprenant une âme en une matière élastique renforcée par un tressage de brins d'acier, lui-même recouvert d'un revêtement anti-abrasion ou résistant aux produits chimiques, caractérisé en ce que ·le tressage est réalisé à partir de cordes comprenant chacune de trois à sept brins.

2. Tuyau flexible selon la revendication 1, caractérisé en ce que les cordes comprennent des brins tressés.

3. Tuyau flexible selon la revendication 1, caractérisé en ce que les cordes comprennent des brins guipés.

4. Tuyau flexible selon la revendication 1, caractérisé en ce que les cordes comprennent des brins toronnés.

5. Tuyau flexible selon la revendication 1, caractérisé en ce que les cordes forment un angle de tressage par rapport à l'axe du tuyau situé entre 25 et 55$^{\circ}$.

6. Tuyau flexible selon la revendication 5, caractérisé en ce que les cordes forment un angle de tressage par rapport à l'axe du tuyau situé entre 30 et 45$^{\circ}$.

7. Tuyau flexible selon la revendication 1, caractérisé en ce que l'angle de tressage à la grimace des cordes par rapport à l'axe du tuyau est situé entre 40 et 55°.

8. Tuyau flexible selon la revendication 1, caractérisé en ce que le coefficient de revêtement de l'âme à l'aide des cordes d'acier est situé entre 60 et 92%.

9. Tuyau flexible selon la revendication 1, caractérisé en ce que l'âme du tuyau est un tube de matière plastique souple.

10. Tuyau flexible selon la revendication 1, caractérisé en ce que l'âme du tuyau est un tube de caoutchouc souple.

11. Tuyau flexible selon la revendication 1, caractérisé en ce que le revêtement anti-abrasion ou résistant aux produits chimiques est un élastomère.

12. Tuyau flexible selon la revendication 1, caractérisé en ce que le revêtement est un caoutchouc.

13. Procédé de fabrication du tuyau flexible selon la revendication 1, caractérisé en ce qu'on tresse sur une âme élastique des cordes préalablement constituées à l'aide de trois à sept brins d'acier, le tressage étant réalisé à l'aide de douze, seize, vingt-quatre, trente deux, trente six ou quarante huit fuseaux contenant chacun de deux à six cordes.

14. Procédé de fabrication selon la revendication 13, caractérisé en ce que les cordes sont réalisées à partir de brins tressés.

- 3 -

0153544

15. Procédé de fabrication selon la revendication 13, caractérisé en ce que les cordes sont réalisées à partir de brins guipés.

16. Procédé de fabrication selon la revendication 13, caractérisé en ce que les cordes sont réalisées à partir de brins toronnés.

**Office européen**
**des brevets**

**RAPPORT DE RECHERCHE EUROPEENNE**

**0153544**
Numéro de la demande

EP 84 81 0074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 069 957 (STRATOFLEX)<br>* En entier, en particulier page 5, ligne 20 - page 6, ligne 15; figures 1-3 * | 1,4 | F 16 L 11/08<br>B 29 C 47/02 |
| A | | 9-13 | |
| | --- | | |
| A | DE-A-2 832 686 (CONTINENTAL GUMMI-WERKE AG)<br>* Revendication 1 * | 1 | |
| | --- | | |
| A | FR-A-2 084 393 (S. MOORE AND COMPANY)<br>* Page 3, ligne 23 - page 5, ligne 20; figures 1-3 * | 1,2,8, 9 | |
| | --- | | DOMAINES TECHNIQUES RECHERCHES (Int. Cl.4) |
| A | GB-A-1 013 059 (G. ANGUS & COMPANY LTD.)<br>* Page 2, lignes 72-105 * | 1 | |
| | --- | | F 16 L<br>B 29 C |
| A | FR-A-2 177 996 (UNIROYAL)<br>* Page 5, ligne 10 - page 6, ligne 8; revendications 1-4; figure 1 * | 5,6 | B 29 F<br>B 29 H |
| | --- | | |
| A | FR-A-2 099 209 (DUNLOP) | | |
| | --- | | |
| A | FR-A-1 585 993 (USUI KOKUSAI SANGYO K.K.) | | |
| | ----- | | |

Le présent rapport de recherche a été établi pour toutes les revendications

| Lieu de la recherche | Date d'achèvement de la recherche | Examinateur |
|---|---|---|
| LA HAYE | 15-10-1984 | WELSCH H.R. |